# EUROPEAN PATENT APPLICATION

(11) **EP 2 860 939 A1**
(43) Date of publication of application: **15.04.2015**
(21) Application number: 14188453.6
(22) Date of filing: 10.10.2014
(51) Int. Cl.: H04L 29/06, H04L 12/801, H04L 12/853

(54) **Systems and methods for adaptive streaming control**

(30) Priority: 11.10.2013 US 201361889555 P
(71) Applicant: Avvasi, Inc., Waterloo, Ontario N2V 1C5 (CA)
(72) Inventor: Radcliffe, Craig, Waterloo, Ontario N2L 5N7 (CA); Struminski, Przemek, Waterloo, Ontario N2V 2Y6 (CA); Kordasiewicz, Roman, Elmira, Ontario N3B 3M8 (CA)
(74) Representative: Benson, Christopher

(57) **Abstract**

Systems and methods for adaptive streaming control include a network (114), a network device (108), and a plurality of media clients (104,105,106) served by the network (114). The network device (108) monitors media session conditions for a media session with a media client (104) served by the network (114) and enforces policy on the media session based on the media session conditions. The network device (108) can enforce policy by determining a current estimated media quality (124) of the media session based on the monitored media session conditions, determining a target media quality (126) for the media session, and modifying the media session responsive to a difference between the current estimated media quality (124) and the target media quality (126) exceeding a threshold.

## Description

### CROSS-REFERENCE TO RELATED APPLICATIONS

The present application claims priority to U.S. Provisional Patent Application Serial No. 61/889,555, entitled "ADAPTIVE STREAMING CONTROLLER" and filed on October 11, 2013, the entirety of which is incorporated by reference herein.

The present application is a continuation-in-part application of U.S. Patent Application Serial No. 13/631,366 (Attorney Docket No. AVV012US), entitled "Systems and Methods for Media Service Delivery" and filed on September 28, 2012, which in turn claims priority to U.S. Provisional Patent Application Serial No. 61/541,046, filed on September 29, 2011, the entireties of which are incorporated by reference herein.

### BACKGROUND

### Field of the Disclosure

The present disclosure relates generally to data networks, and more particularly to the identification, organization, tracking, and analysis of streaming media in a network.

### Description of the Related Art

Streamed media, particularly video, represents an increasingly large percentage of the data delivered over the Internet and other networks. As the popularity of media streaming increases, network providers, content providers, and other service providers are evaluated by their customers based on their ability to deliver an acceptable quality of experience (QoE). However, maintaining high quality streaming is becoming increasingly difficult for the organizations providing and maintaining such networks. For example, mobile data networks may be unable to support high-bandwidth usage by a large number of devices during peak times or in overloaded areas, resulting in network congestion. Further, adaptive streaming clients are optimized to play the highest-quality media stream possible without consideration for the health of the data network as a whole. Such conditions may result in network congestion, impaired data usage, a degraded user experience, and the like.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram illustrating a networked system in accordance with some embodiments.
FIG. 2 is a flow diagram illustrating an example method for adaptive streaming control in accordance with some embodiments.
FIG. 3 is a block diagram illustrating a media service gateway in accordance with some embodiments.
FIG. 4 is a block diagram illustrating an adaptive streaming control system in accordance with some embodiments.
FIG. 5 is a flow diagram illustrating an example method for selecting an adaptive streaming control mechanism in accordance with some embodiments.

### DETAILED DESCRIPTION

An aspect provides a system comprising: a network device coupled to a network, the network device to: monitor media session conditions for a media session with a media client served by the network; and enforce policy on the media session based on the media session conditions responsive to determining the media session is using an adaptive streaming protocol.

The enforced policy may include at least one of: session policy; video policy; audio policy; subscriber policy; client device policy; network policy; and application policy.

The network device may enforce policy on the media session by: determining a current estimated media quality of at least one media stream of the media session based on the monitored media session conditions; determining a target media quality for the media session; and modifying the media session responsive to a difference between the current estimated media quality and the target media quality exceeding a threshold.

Modifying the media session may comprise modifying the media session using an adaptive steaming control mechanism. Modifying the media session using the adaptive streaming control mechanism may comprise modifying a manifest of available operating points presented to the media client so as to present to the media client only those available operating points that satisfy the target media quality.

Modifying the media session using the adaptive streaming control mechanism may comprise modifying (via shaping, policing, and the like) a network bit rate for the media session to direct the media client to select an operating point for playback that satisfies the target media quality.

Modifying the media session using the adaptive streaming control mechanism may comprise modifying at least one of an application-layer request or an application-layer response from the media client in order to deliver an operating point satisfying the target media quality in place of another operating point requested by the media client.

Modifying the media session using the adaptive streaming control mechanism may comprise transcoding at least one of an audio stream or a video stream of an operating point requested by the media client in order to produce a substitute operating point that satisfies the target media quality.

Modifying the media session using the adaptive streaming control mechanism may comprise at least one of interrupting or denying a request from the media client for an operating point that does not satisfy the target media quality.

The current estimated media quality may be determined using at least one of: an algorithmic calculation; a lookup table based on at least one of video attributes or audio attributes; application metadata; and a heuristically determined calculation based on aggregate information about similar media sessions.

An aspect provides, in a network comprising a network device coupled to a media client, a method comprising: monitoring, at the network device, media session conditions for a media session with the media client; and enforcing, at the network device, policy on the media session based on the media session conditions responsive to determining the media session is using an adaptive streaming protocol.

The enforced policy may include at least one of: session policy; video policy; audio policy; subscriber policy; client device policy; network policy; and application policy.

Enforcing policy on the media session may comprise: determining a current estimated media quality of the media session based on the monitored media session conditions; determining a target media quality for the media session; and modifying the media session responsive to a difference between the current estimated media quality and the target media quality exceeding a threshold.

Modifying the media session may comprise modifying a manifest of available operating points presented to the media client so as to present to the media client only those available operating points that satisfy the target media quality.

Modifying the media session may comprise modifying a network bit rate for the media session to direct the media client to select an operating point for playback that satisfies the target media quality.

Modifying the media session may comprise modifying at least one of an application-layer request or an application-layer response from the media client in order to deliver an operating point satisfying the target media quality in place of another operating point requested by the media client.

Modifying the media session may comprise transcoding at least one of an audio stream or a video stream of an operating point requested by the media client in order to produce a substitute media stream that satisfies the target media quality.

Modifying the media session may comprise at least one of interrupting or denying a request from the media client for an operating point that does not satisfy the target media quality.

An aspect provides a non-transitory computer readable storage medium embodying a set of executable instructions, the set of executable instructions to manipulate at least one processor to: monitor media session conditions for a media session with a media client served by a network; and enforce policy on the media session based on the media session conditions responsive to determining the media session uses an adaptive streaming protocol.

In some embodiments, the executable instructions to manipulate at least one processor to enforce policy comprise executable instructions to manipulate at least one processor to: determine a current estimated media quality of the media session based on the monitored media session conditions; determine a target media quality for the media session; and modify the media session responsive to a difference between the current estimated media quality and the target media quality exceeding a threshold.

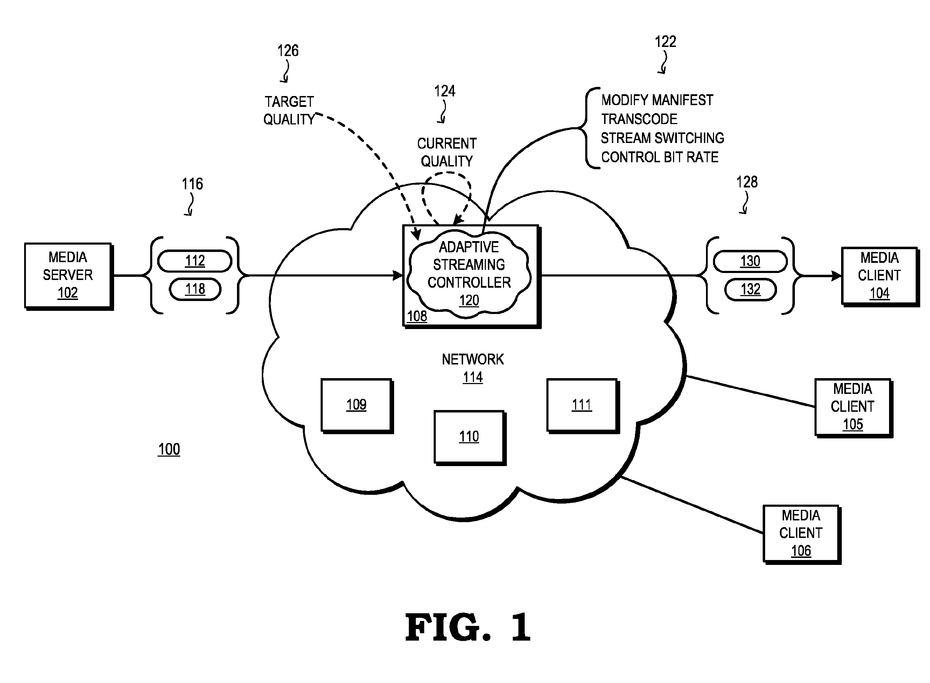

Adaptive streaming is an approach to media streaming over a packet network in which a client dynamically selects from among from multiple "operating points" based on various input conditions, such as current network conditions, user preferences, and the like. As used herein, the term "operating points" refers to a fixed set of one or more media attributes specified by a streaming server, such as, for example, a manifest. FIGs. 1-5 illustrate example adaptive streaming systems and techniques for controlling the presented media quality (that is, the quality of media as delivered to the client) of a media session streaming across a network to a media client so as to equitably distribute network resources while maximizing quality of experience (QoE) for users and avoiding common issues related to network congestion. In at least one embodiment, a network device generates a presented media stream for a media session for viewing by a user of a client device. In generating the presented media stream, the network device interleaves media from one or more input media streams. The network device monitors media session conditions to determine a target media quality to present to the client. The network device further determines an estimated media quality for the current operating point, representing an estimation of the relative quality of the current operating point being viewed by the user, to be compared with the target media quality. If the difference between the target media quality and the current estimated media quality is greater than a predetermined threshold, the network device modifies the quality of the presented media stream so as to reduce the quality of the media stream, thereby reducing the bandwidth required of the network. That is, if the current estimated media quality is higher than the target media quality (by more than the threshold amount) the network device identifies that the estimated media quality of the current stream is better than necessary, and therefore should be reduced in the interest of equitable distribution of the network bandwidth.

To achieve this, the network device may select one or more of several adaptive streaming control mechanisms. For example, the network device may modify a manifest of the media session's operating points so as to force playback of a particular operating point associated with the media session, transcode the media stream, control the network bit rate available to the media session so as to force playback of a particular operating point or range of operating points, or deny connections requesting operating points that do not conform to the target media quality. In at least one embodiment, the network device selects which adaptive streaming control mechanism to use based on whether the connection is encrypted or otherwise encoded in a manner that prevents modification, whether the media session contains a parsable manifest, whether the manifest includes operating points that exceed some threshold with respect to the target media quality, whether the estimated periodic media bit rate of the operating point can be calculated, whether the media client copes well with connection denial, whether the operating point can be determined from the connection URL, and whether the segment (a short time slice of the media clip, typically a few seconds in duration) lengths are consistent within an operating point.

In at least one embodiment, the adaptive streaming control mechanism may be policy-based. For example, a service provider may create pricing plans or other agreements with content providers, aggregators, or subscribers regarding a QoE requirement for streaming media sessions. As such, a policy may be implemented to reflect the agreement, such that the network device determines the target media quality based on the policy. These adaptive streaming control techniques allow service providers a mechanism by which they can manage and mitigate the impact of adaptive streaming sessions on their data networks, while also ensuring that the QoE of the network subscribers remains at an acceptable level.

FIG. 1 illustrates a networked system 100 in accordance with some embodiments. The network system 100 comprises a media server 102, a plurality of media clients (or media players) 104, 105, 106, and network devices 108, 109, 110, 111. The media server 102 transmits media content (e.g., a media stream 112 in a streaming media session) to the media clients 104, 105, 106 through a network 114. Each of the plurality of media clients may comprise a set-top box, an IP television, a personal media player, a digital video disc (DVD) player with streaming support, a Blu-ray player with streaming support, a gaming console with streaming support, or a mobile device that is coupleable to the network 114, such as a smartphone, a tablet, or a personal computer. The network 114 may be implemented as a delivery network comprising numerous interconnected hardware and software-based systems through which streaming media travels. While the media server 102 is depicted as being directly connected to the network 114 in the illustrated embodiment, in some embodiments the media server 102 is connected to the network 114 via intermediate networks or service providers. Further, in some embodiments, the media server 102 is an edge node of a content delivery network (CDN).

Responsive to a user of a media client 104 requesting or otherwise initiating a media session, the media server 102 transmits a data packet 116 comprising the media stream 112 to the network 114. Additionally, in some embodiments, the media server 102 transmits a manifest 118 corresponding to the media stream 112 (or the media session as a whole) with the data packet 116 to the network 114. The network device 108 (which may be, for example, a media service gateway (MSG)) is configured to forward the data packets (e.g., data packet 116) associated with the media sessions of each media client (e.g., media client 104), with minimal latency. Other network devices 109, 110, 111 of the network 114 may be configured similar to network device 108. Additionally, in the illustrated embodiments, the network device 108 is equipped to modify the media session, for example to equitably distribute resources of the network 114 to the media clients 104, 105, 106 while maximizing quality of experience (QoE) for users and avoiding common issues related to network congestion.

In some embodiments, the network device 108 inspects data packets on network interfaces (e.g., the media client 104) being monitored. In other embodiments, the network device 108 looks for media sessions on the network 114, and when detected, intercepts or otherwise receives the packet 116 in the network 114. Further, the network device 108 monitors one or more media session conditions to facilitate adaptive streaming control. For example, in at least one embodiment, the network device 108 monitors session-wide conditions, periodic conditions, and dynamic conditions. In other embodiments, the network device 108 may monitor any combination of media session conditions, or only one media session condition. Session-wide conditions may include subscriber information (e.g., media client type, subscription contract information, policy information, etc.), media server information (e.g., media server type, available quality levels, etc.) or the like. Periodic conditions may include network events (e.g., a media client starting or stopping a media session), local network conditions (e.g., connectivity strength), network congestion information (e.g. resource availability), or the like. Dynamic conditions may include media bitstream conditions (e.g., bit rate), current estimated media quality, or the like.

The network device 108 further comprises an adaptive streaming controller 120. The adaptive streaming controller 120 comprises one or more adaptive streaming control mechanisms 122 that allow the network device 108 to modify the presentation of the media stream 112 to the media client 104 so as to strike a balance between network resources and presented media quality among all of the media clients 104, 105, 106 of the network 114. In at least one embodiment, the adaptive streaming control mechanisms include modifying the manifest, transcoding, request and/or response modification, controlling the network bit rate, and denying connections. The network device 108 identifies when to use the adaptive streaming control mechanism based on a comparison of a target media quality for the media session and the current estimated media quality of the current operating point. If the difference between the target media quality and the current estimated media quality exceeds a threshold, then the adaptive streaming controller 120 uses one or more of the adaptive streaming control mechanisms 122 to modify the quality of the presented media stream 112 so as to bring the estimation of the current quality level closer to the target quality level, or otherwise reduce the impact on resources of the network 114.

Conventionally, quality level may be assessed based on factors such as format, encoding options, resolutions and bit rates. The large variety of media applications using different options, coupled with the wide range of devices on which content may be viewed, has conventionally resulted in widely varying quality levels.

The described methods and systems, however, may apply policies to media sessions based on a more comprehensive quality metric, for example based on a quality of experience (QoE) score. In some cases, the quality metric may be in the form of a numerical score. In some other cases, the quality metric may be in some other form, such as, for example, a letter score, a descriptive (e.g. 'high', 'medium', 'low') etc. The quality metric may be expressed as a range of scores or an absolute score.

A commonly accepted approach to assessing media stream quality involves subjective experiments. Such experiments may be generally considered to represent the most accurate method for obtaining quality scores and ratings. In subjective video experiments, a number of viewers are asked to watch a set of clips and rate their quality. There are a wide variety of subjective testing methods and procedures, which will be appreciated by those skilled in the art. One common way to reflect the result of the experiment is by computing an average rating over all viewers. In some cases, additional data processing, including normalization and outlier removal, may be used. This average rating may be referred to as a mean opinion score (MOS). One well-known application of MOS principles is in the evaluation of voice call quality based on various speech codecs and transmission parameters.

Quantifying a qualitative characteristic can be challenging because perception is individualistic and generally conveyed only as an opinion based on shared comparisons. Subjectivity and variability of viewer ratings can be difficult to completely eliminate. Accordingly, subjective experiments often attempt to minimize these factors with precise instructions, training and controlled environments. Nevertheless, a quality score remains defined by a statistical distribution rather than an exact measurement. Objective quality metrics are algorithms designed to characterize the quality of video and to predict subjective quality or viewer MOS. There are a wide variety of objective quality metrics, developed by academic researchers and standardization bodies. These metrics may be generally categorized as full-reference, partial-reference, or no-reference, based on the amount of information required about a reference media (e.g., the source content).

Full-reference quality measurement techniques compare an impaired version of the media file to a reference version of the media file. The impaired version is typically the media (e.g., audio/video) as output from some system, which could be an encoder, transcoder, or other media processing system. The reference version may be, for example, the input to the system. Full-reference techniques typically operate in the spatial or pixel domain as opposed to the compressed domain. That is, in the example context of a video media file, the video content is decoded and rendered and the resulting, post-encoded video can be compared to the reference video on a pixel-by-pixel basis. These measures are generally accurate at reflecting how closely the post-encoded video resembles the reference video. More complex methods may also attempt to detect common artifacts such as blocking, blurring, ringing and related artifacts. Popular full-reference measures include peak signal-to-noise ratio (PSNR), structural similarity (SSIM), video quality metric (VQM), and perceptual evaluation of video quality (PEVQ). These operate in the spatial domain, require access to the reference video, have high computational complexity, and are not easily automated outside a very controlled environment.

No-reference, also referred to as zero-reference, quality measurement techniques do not compare the post-encoded content to the reference content. Rather, no-reference techniques may estimate quality by analyzing only the post-encoded content, using algorithms and heuristics that are based on indicative encoding parameters and/or inferred encoding artifacts. No-reference approaches can be generally subdivided into two broad categories: a) bitstream-based techniques, which typically parse various headers and payloads to varying depths; and b) pixel-based techniques which fully decode the compressed video to generate a transformed or post-encoded video. Pixel-based techniques may exhibit better ability to detect and quantify encoding artifacts. Generally, no-reference techniques may not be as accurate as full-reference. However, they are generally less computationally complex and are therefore more scalable for deployment in a service provider network. Computational complexity can be traded off against accuracy by controlling the depth of parsing. Access to reference content is not a requirement. These techniques can be reasonably automated outside controlled environments.

The described embodiments may generally provide no-reference techniques for computing quality scores for audio and video components of a media session, where these quality scores are estimates of perceived quality by the viewer for the individual components of the media session. For example, the quality score may be a presentation quality score (PQS), which can be a quality score that takes into account the impact of video encoding parameters and device-specific parameters on the user experience. Key performance indicators (KPIs) that can be used to compute the PQS may include codec type, resolution, bits per pixel, frame rate, device type, display size, dots per inch, and the like. Additional KPIs may include coding parameters parsed from the bitstream, such as macroblock mode, macroblock quantization parameter, coded macroblock size in bits, intra prediction mode, motion compensation mode, motion vector magnitude, transform coefficient size, transform coefficient distribution and coded frame size, and the like. The PQS may be determined relative to a "best" viewing experience attainable on a specific device under ideal viewing conditions.

The PQS may be normalized for a wide variety of inputs including different streaming technologies, codecs, sampling rates, and playback devices. The PQS may also be based, at least in part, on content complexity, as content complexity can be a factor in the visibility of impairments or artifacts due to the psychovisual effects of the human visual system (e.g., a "masking" effect, whereby lower video quality in a fast-moving scene is less perceptible to the human visual system than in a slow-moving or still scene). The PQS can be computed periodically throughout a media session or a media stream. In some cases, the PQS can incorporate a memory model to account for recency effects. However, in some cases, the impact of recency effects may not be significant; accordingly, it may not be necessary to model or mitigate such effects.

In some cases, the PQS can be adjusted based on a detected content type (e.g., movies, news, sports, music videos, etc.). Content type may be detected based on properties of the video (e.g., relatively little motion, frequency of intra frames, etc.) or metadata associated with the media session (e.g., site domain or URL). In some cases, the described embodiments may be dynamically scalable in response to changing network or computational loads. Various analysis modes may trade off complexity and accuracy. Depending on the degree of accuracy desired, approximation, sampling and variability may be employed to increase capacity to analyze a high number of concurrent media sessions.

To quantify the presentation quality of a large and diverse amount of media sessions traversing a network link, PQS may be normalized based on playback device and media format. These PQS calculation techniques allow quantification of the quality of various diverse Internet video sources (e.g., for quality assurance, monitoring or comparison), and subscriber satisfaction independent of network impairments. In the illustrated embodiment, these PQS calculation techniques are used to compute a presentation quality score (PQS) for the media stream 112, where the media stream comprises video, audio or both. In some embodiments, the PQS provides a measure of the quality of the media stream 112 with respect to the media client 104, while minimizing or ignoring the impact of network conditions on the subscriber's QoE for the media session. Accordingly, the PQS may be used to estimate a level of viewer satisfaction with the quality of the media stream 112 as presented on the media client 104 (e.g., the viewer's receiving device). In some cases, the qPQS may be normalized in some manner to account for various device profiles and codec differences.

The PQS may be computed using a no-reference bitstream technique, a pixel-based technique, or a combination of these, which may be used as an indicator of viewer satisfaction with the audiovisual quality of the media stream 1₁₂. These qualitatively determined PQS values permit normalized and automatic measurement of subjective quality across a diversity of content and devices. The PQS values may be based on a MOS score of 1 to 5, or other scoring scale. Computation of the PQS may take into account a variety of factors. Moreover, various network and device conditions, as well as business rules, may make it desirable to increase or reduce the complexity of the computation. Accordingly, in at least one embodiment, one or more analysis modes are used to facilitate scalable computation of the PQS. For example, in some modes, the accuracy of the PQS can be improved with a large amount of computation. Conversely, various lower-complexity modes can be used, which may decrease accuracy. This tradeoff between accuracy and complexity may be adjusted dynamically throughout one or more media sessions.

Example techniques for determining the estimated media quality can include: algorithmically estimating the media quality by computing a presentation quality of experience score (PQS), estimating media bit rate, or other computed quality metrics; estimating via a lookup table using one or both of video and audio attributes; estimating via application metadata published in a manifest file or other side-channel mechanisms; and estimating via a heuristic that uses aggregate information about similar media sessions.

In the illustrated embodiment, the network device 108 calculates a current estimated media quality 124 using a presentation-quality algorithm, a lookup table, application metadata, or a quality estimation heuristic. The network device 108 may continuously calculate the current estimated media quality lever 124 throughout the playback of the media stream 112, at predetermined intervals, once per media stream, randomly, or a combination of these, to estimate the current estimated quality for the user of the media client 104 device. To determine when to modify the quality of the presented media stream 112 using the adaptive streaming controller 120, the network device 108 compares the current estimated media quality 124 to a target media quality 126. The target media quality represents a desired or maximum presentation quality for the media stream 112 presented to the media client 104 based on one or more media session conditions monitored by the network device 108.

As an example of using these techniques to facilitate preserving network resources, if the current quality level 124 rises above (i.e., higher QoE) the target quality level 126, then the adaptive streaming controller 120 may modify the quality of the presented media stream 112 to reduce the quality such that the resulting media quality 124 is equal or less than that target media quality 126, reducing the impact of the media stream 112 on the network 114.

The target media quality 126 may be a static or dynamic value based on any of a variety of session conditions monitored by the network device 108. For example, in one embodiment, the network device 108 accesses a target media quality table to identify the appropriate target media quality 126. The target media quality table may assign the target media quality 126 values based on one or more of the session conditions, (e.g., media client 104 device type, subscription type, media server 102 type, etc.). While the target media quality 126 is depicted as being accessed by, or delivered to, the network device 108, in some embodiments the network device 108 itself calculates or otherwise determines the target media quality 126. In some embodiments, the target media quality 126 is determined based on one or more static or dynamic policies. In the case of a dynamic target media quality 126, the value is determined based on one or more heuristics. For example, the target media quality 126 could be dynamically updated based on changing conditions of the network 114 (e.g., network congestion), a time-dependent policy (e.g., subscription based on a certain amount of time at a certain quality level, or a certain quality level at certain hours, etc.), or the like. Some embodiments may employ a threshold, such that the adaptive streaming controller 120 only modifies the presentation of the media stream 112 if the difference between the current estimated media quality 124 and the target media quality 126 is greater than the threshold value. Further, in some embodiments, one or more thresholds may be used in conjunction with the target media quality 126 to represent both an upper bound and a lower bound for the current media quality 124. In some embodiments, the network device 108 may take into account multiple target media quality values for a single media session 112. For example, one target media quality value may represent a lower threshold for the current estimated media quality 124, while a second target media quality value may represent an upper threshold for the current estimated media quality 124.

If the comparison of the current estimated media quality 124 and the target media quality 126, by the network device 108, indicates that the media stream 112 needs to be modified, the adaptive streaming controller 120 selects one of the adaptive streaming control mechanisms 122 to produce a modified data packet 128. The modified data packet 128 comprises a modified media stream 130, a modified manifest 132, or both, depending on the adaptive streaming control mechanisms 122 used by the adaptive streaming controller 120. The modified data packet 128 is transmitted to the media client 104, such that the current estimated media quality 124 of the modified media stream 130 is consistent with the target media quality 126.

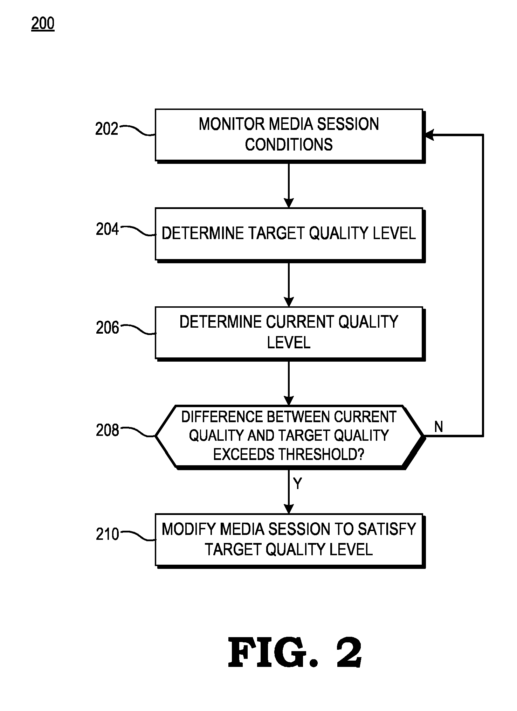

FIG. 2 is a flow diagram illustrating a method 200 for adaptive streaming control using the networked system 100 of FIG. 1, in accordance with some embodiments. At block 202, the network device 108 monitors media session conditions, such as, session-wide conditions, periodic conditions, and dynamic conditions. Session-wide conditions may include media client 104 information (e.g., media client type, subscription information, policy information, etc.), media server 102 information (e.g., media server type, available quality levels, etc.) or the like. Periodic conditions may include network events (e.g., a media client starting or stopping a media session), local network conditions (e.g., connectivity strength), network congestion information (e.g. resource availability), or the like. Dynamic conditions may include media bitstream conditions (e.g., bit rate), current estimated media quality or other QoE information, or the like.

At block 204, the network device 108 determines the target media quality 126 based on at least one of the media session conditions monitored by the network device 108. For example, in some embodiments, the network device 108 accesses a table to identify the target media quality 126 based on the media client 104 type (e.g., device type, screen size, etc.) or other media session conditions. The target media quality 126 may be indicated using any scale, for example, a scale of 1 to 5. The target media quality 126 may be statically or dynamically configured. One example of a statically-configured policy that assigns a PQS value of 3.5 as the target media quality 126 to all Hypertext Transfer Protocol Live Streaming (HLS) sessions is shown below in Table 1.

**Table 1**

| |
|---|
| condition 1 { |
| term { |
| streaming-protocol { |
| is http-live-streaming-all; |
| } |
| } |
| } |
| action { |
| stream-switching { |
| target-presentation-quality-score 3.5; |
| stream-switching-method police; |
| } |
| } |

When the policy of Table 1 is enabled, all HLS sessions will be assigned a target media quality 126 of PQS 3.5, and if the network device 108 determines that the media stream 112 requires modification, the adaptive streaming controller 120 will use the "stream-switching" adaptive streaming control mechanism 122. In the example of Table 1, the target media quality 126 is determined based on the session-wide condition of the streaming protocol (i.e., HLS) detected by the network device 108.

One example of a dynamically-configured target media quality 126, would be the network device 108 adjusting the target media quality 126 based on detecting congestion at a relevant cell location of the network 114. In such an example, the congestion of the network 114 represents a periodic condition monitored by the network device 108. Another example of a dynamically-configured target media quality 126 is based on a billing policy. For example, if a subscriber pays for ten hours of top-tier media delivery quality (e.g., represented by a target media quality 126 of 4.5), then when the ten-hour limit has been exceeded, the network device 108 adjusts the target media quality 126 to correspond to a lower quality level (e.g., a target media quality value of PQS 3.5). Further, the target media quality 126 may be dynamically configured based on a time-of-day policy. For example, a time-of-day policy may indicate that between 5:00 p.m. and 9:00 p.m. the target media quality 126 is to have a value of 3.5, and that otherwise the target media quality 126 is to have a value of 4.5. For an active adaptive streaming session that runs from 8:30 p.m. to 9:30 p.m., the network device 108 would use a target media quality 126 of PQS 3.5 for the 8:30 p.m. to 9:00 p.m. portion, and a target media quality 126 of PQS 4.5 for the 9:00 p.m. to 9:30 p.m. portion. Time-of-day policies may be used to reduce congestion during peak hours, and in some cases may correspond to a user's quality expectations during these peak hours. In some embodiments, the network device 108 identifies more than one target media quality 126 at a time, for example to represent an upper and lower threshold of media quality.

At block 206, the network device 108 determines the current estimated media quality 124. In at least one embodiment, the network device 108 determines the current estimated media quality 124 based on a presentation-quality algorithm, a lookup table, application metadata, a quality estimation heuristic, or a combination of these. To illustrate, the following table is a simple non-exhaustive example of a lookup table that could be implemented for (where QUALITY_3 > QUALITY_2 > QUALITY_1) based on the source ("site"), the client device ("device"), the video dimensions ("video_width" and "video_height"), video codec characteristics ("video_codec" and "video_codec_profile"), and audio codec characteristic ("audio_codec" and "audio_codec profile"):

**Table 2**

| |
|---|
| (site="netflix.com", device =IPHONE, video_width=1920, video_height=1080, video_codec=H264, video_codec_profile=HIGH, audio_codec=AAC, audio_codec_profile=HE) => QUALITY_3 |
| |
| (site="netflix.com", device =IPHONE, video_width=640, video_height=360, video_codec=H264, video_codec_profile=HIGH, audio_codec=AAC, |
| audio_codec_profile=HE) => QUALITY_2 |
| |
| (site="netflix.com", device =IPHONE, video_width=320, video_height=240, video_codec=H264, video_codec_profile=BASELINE, audio_codec=AAC, audio_codec_profile=LE) => QUALITY_1 |

At block 208, the network device 108 compares the current estimated media quality 124 and the target media quality 126. In at least one embodiment, the difference between the current quality level 124 and the target quality level 126 is compared to a threshold value, for example, to allow for slight deviations. In the depicted method 200, if the difference between the current estimated media quality 124 and the target media quality 126 does not exceed the threshold value, the network device 108 continues monitoring the media session conditions at block 202 to determine a target media quality at block 204, or otherwise calculates a subsequent current estimated media quality 124 at block 206. However, if the difference between the current estimated media quality 124 and the target media quality 126 exceeds the threshold, the network device 108 proceeds to block 210.

At block 210, the network device 108 uses the adaptive streaming controller 120 to modify the presentation of the media stream 112 to account for the difference between the current media quality (represented by the current estimated media quality 124) and the target media quality (represented by the target media quality 126). The adaptive streaming controller 120 may use one or more adaptive streaming control mechanisms 122 to create a modified data packet 128 (comprising a modified media stream 130 or a modified manifest 132) to transmit to the media client 104. The adaptive streaming control mechanisms 122 may comprise, for example, modifying the manifest 118, transcoding, stream switching, controlling the network bit rate, denial of some streams, or a combination thereof. In at least one embodiment, the adaptive streaming controller 120 modifies the presentation of the media stream 112 in a manner transparent to the media client 104.

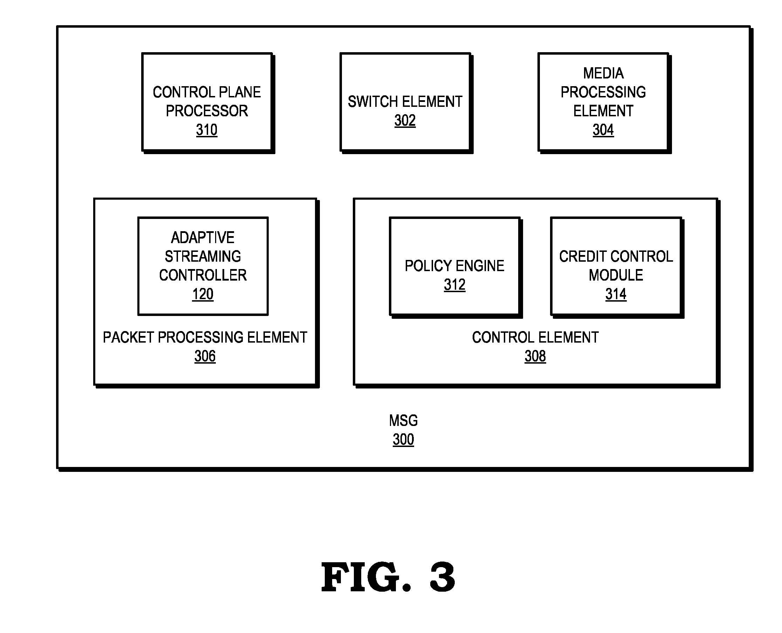

FIG. 3 illustrates a simplified block diagram of the network device 108 of FIG. 1 implemented as a media service gateway (MSG) 300 in accordance with some embodiments. The MSG 300 can be configured to route any generic network data traffic for client devices, such as user equipment, to and from a network, and the Internet. The MSG 300 can identify media sessions in generic network data traffic, and permit selective media session-based policy execution and traffic management of in-progress communication sessions ("flows"). As such, media sessions can be controlled based on media-related policies and optionally, non-media data can be controlled based on other policies. Such functionality is a significant enhancement over conventional per-flow or per-subscriber application of policies, in which policies are applied to individual flows (on a per-packet or per-flow basis) or applied to all data for a particular subscriber (per-subscriber).

Based on the service provider's policy rules, the MSG 300 can be configured to determine and enforce media session-based policies to manage user's media traffic to a time-based quota, optionally using quality levels or quality-related parameters. Determinations and enforcement can be performed by working in a closed-loop mode using continuous real-time feedback to optimize or tune individual media sessions. In conjunction with detailed media session analysis and reporting, the MSG 300 can provide control and transparency to service providers attempting to manage rapidly growing media traffic on their network.

The MSG 300 can perform a number of functions conventionally implemented via separate interconnected physical appliances. Implementation in an integrated architecture, which supports a wide range of processor options, is beneficial to reduce cost while improving performance and reliability. Accordingly, the MSG 300 comprises one or more switch elements 302, one or more media processing elements 304, one or more packet processing elements 306, one or more control elements 308, or one or more control plane processors 310, optionally in an integrated platform. In some embodiments, the function of one or more of switch elements 302, media processing elements 304, packet processing elements 306, control elements 308, or control plane processors 310 can be integrated, such that a subset of the elements implements the entire functionality of MSG 300 as described herein. In some embodiments, one or more of the elements can be implemented as a server "blade", which can be coupled together via a backplane. Each of the elements can include one or more processors and memories.

Switch elements 302 can be configured to perform control or user plane traffic load balancing across packet processing elements. Switch elements 302 can also be configured to operate the MSG 300 in one or more of a number of intersection modes. The intersection modes can permit passive monitoring of traffic (supporting measuring and reporting media traffic against a time-based quota, but optionally not enforcing) or permit active management of traffic (supporting measuring, reporting and enforcing).

Media processing elements 304 can be configured to perform inline, real-time, audio and video transcoding of selected media sessions. Media processing elements 304 can generally perform bit rate reduction. In some cases, the media processing element 304 can perform sampling rate reduction (e.g., spatial resolution or frame rate reduction for video, reducing sample frequency or number of channels for audio). In some cases, the media processing element 304 can perform format conversion for improved compression efficiency, whereby the output media stream being encoded can be converted to different more efficient format than that of the input media stream being decoded. Further, in some embodiments, the media processing elements 304 serve as the adaptive streaming controller 120 of FIG. 1. The media processing elements 304 may perform any of a number of adaptive streaming modification mechanisms (including stream switching, manifest editing, request/response rewriting, denial of some input streams, transcoding, and bit rate control) to modify the presentation of the media stream, as described herein.

The control element 308 can generally perform system management and (optionally centralized) application functions. System management functions can include configuration and command line interfacing, Simple Network Monitoring Protocol (SNMP) alarms and traps and middleware services to support software upgrades, file system management, and system management functions. The control element 308 can include a policy engine 312, acting as a Local Policy Decision Point (LPDP). The policies available at the MSG 300 can be dynamically changed by a network operator. In some cases, the policy engine 312 of the control element 308 can access policies located elsewhere on a network.

In some embodiments, the policy engine 312 maintains information related to media session conditions monitored by the MSG 300. Further, in at least one embodiment, the policy engine 312 determines the target media quality for the media stream. The policy engine 312 can maintain and evaluate a set of locally configured node-level policies, including media session policies, and other configuration settings, that are evaluated by a rules engine in order to perform active management of subscribers, locations, and media sessions. Media sessions can be subject to global constraints and affected by dynamic policies triggered during session lifetime. Accordingly, policy engine 312 can keep track of live media session metrics and network traffic measurements. Policy engine 312 can use this information to make policy decisions both when each media session starts and throughout the lifetime of the media session, as the policy engine 312 can adjust polices in the middle of a media session due to changes, e.g. in network conditions, changes in business objectives, time-of-day, etc..

Media session policies include access control, re-multiplexing, request-response modification, client-aware buffer-shaping, transcoding, adaptive streaming control, in addition to the more conventional per-flow actions such as marking, policing/shaping, etc. Media session policy actions can be further scoped or constrained by one or more individual or aggregate media session characteristics, such as: subscriber identity (e.g., International Mobile Station Equipment Identity (IMEI), International Mobile Subscriber Identity (IMSI), Mobile Station International Subscriber Directory Number (MSISDN), Internet Protocol (IP) address), subscriber tier, roaming status; transport protocol, application protocol, streaming protocol; container type, container meta-data (e.g., clip size, clip duration); video attributes (e.g., codec, profile, resolution, frame rate, bit rate); audio attributes (e.g., codec, channels, sampling rate, bit rate); device type, device model, device operating system, player capabilities; network location, APN, location capacity (e.g., sessions, media bandwidth, delivered bandwidth, congested status); traffic originating from a particular media site or service, genre (e.g., sports, advertising); time of day; or QoE metric; or a combination thereof.

For adaptive streaming control mechanisms, the policy engine 312 notifies the adaptive streaming controller 120 via a messaging channel. The policy may be scoped or constrained by one or more individual or aggregate media session characteristics or conditions. For example, in at least one embodiment the policy engine 312 may consider localized congestion on a mobile network as a condition for policy scoping. The policy engine 312 may require that the adaptive streaming controller 120 force the media client to a stream that is nearest to or less than a target media quality value. The policy engine 312 may additionally require that the adaptive streaming controller 120 prevent the presentation of the media session to the media client from exceeding a per-session maximum bit rate. The policy engine 312 may also indicate a preference for which adaptive streaming control mechanism the adaptive streaming controller 120 is to use.

The control element 308 can also include a credit control module 314 which acts as a credit control client and interacts with a credit control server, such as, e.g. a charging system. In particular, the credit control client can access and update quota information from the credit control server in time-denominated units, using one or more of the media duration parameters as described herein. Thus, the MSG 300 can monitor and manage usage of media service under direction of a charging server/charging system. Packet processing element 306 may implement adaptive streaming control via implementation of the adaptive streaming controller 120 (FIG. 1), and as governed by policy. As described herein, the adaptive streaming controller 120 may employ a number of tools including request-response modification, manifest editing, conventional shaping or policing, connection denial, and transcoding. For adaptive streaming, request-response modification may replace client segment requests for high definition content with similar requests for standard definition content. Manifest editing may modify the media stream manifest files in response to a client request. Manifest editing may modify or reduce the available operating points in order to control the operating points that are available to the client. Accordingly, the client may make further requests based on the altered manifest. Conventional shaping or policing may be applied to adaptive streaming to limit the media session bandwidth, thereby forcing the client to remain at or below a certain operating point. In addition, shaping or policing that is driven by a model of the client buffer may be applied to achieve the target media quality while preventing overbuffering and avoiding the introduction of additional stall events.

Deeper processing provided by the packet processing element 306 can include parsing of the transport, application and container layers of received/sent user plane packets, and execution of policy based on subscriber, device, location or media session analysis and processing, for example. Packet processing element 306 can include processing on application layer content such as Hypertext Transfer Protocol (HTTP), Real Time Streaming Protocol (RTSP), Real Time Messaging Protocol (RTMP), or the like. Packet processing element 306 can include processing on container layer content such as Moving Picture Experts Group-4 Part 14 (MP4), flash video (FLV), HLS, or the like. The packet processing element 306 can forward general data traffic information and specifically media session information, e.g. bit rates, TCP throughput, real-time text (RTT), etc., to other elements.

Analysis can include generating statistics and QoE measurements for media sessions, providing estimates of bandwidth required to serve a client request and media stream at a given QoE. Packet processing element can make these values available as necessary within the system. Examples of statistics that can be generated include, e.g., bandwidth, site, device, video codec, resolution, video bit rate, frame rate, clip duration, streamed duration, audio codec, channels, audio bit rate, sampling rate, or the like. QoE measurements computed can include, e.g., delivery QoE, presentation QoE, and session QoE. Further, in some embodiments, the packet processing element 306 determines the current estimated media quality for the media stream using one or more of the methods discussed herein.

In some cases, the control plane processor 310 can be configured to process control plane messages to extract subscriber identity or mobile device identity information, and to map the mobile devices (e.g., physical or geographic location). The control plane processor 310 can forward the identity and location information to other elements. For example, in mobile networks using 3^{rd} Generation Partnership Project (3GPP), General Packet Radio Service (GPRS)/Universal Mobile Telecommunications System (UMTS), Long Term Evolution (LTE), or similar standards, subscriber and mobile device identity information, location, as well as other mobility parameters can be gathered for subscriber, device, and location-based traffic management and reporting purposes. Such gathering can be accomplished in part by inspecting control plane messages exchanged between gateways, for example GPRS Tunneling Protocol Control (GTP-C) over the Gn interface, GPRS Tunneling Protocol version 2 (GTPv2) over the S4/S11 or S5/S8 interfaces, or the like, or by receiving mobility information from other network nodes, such as the radio network controller (RNC), Mobile Management Entity (MME) or the like.

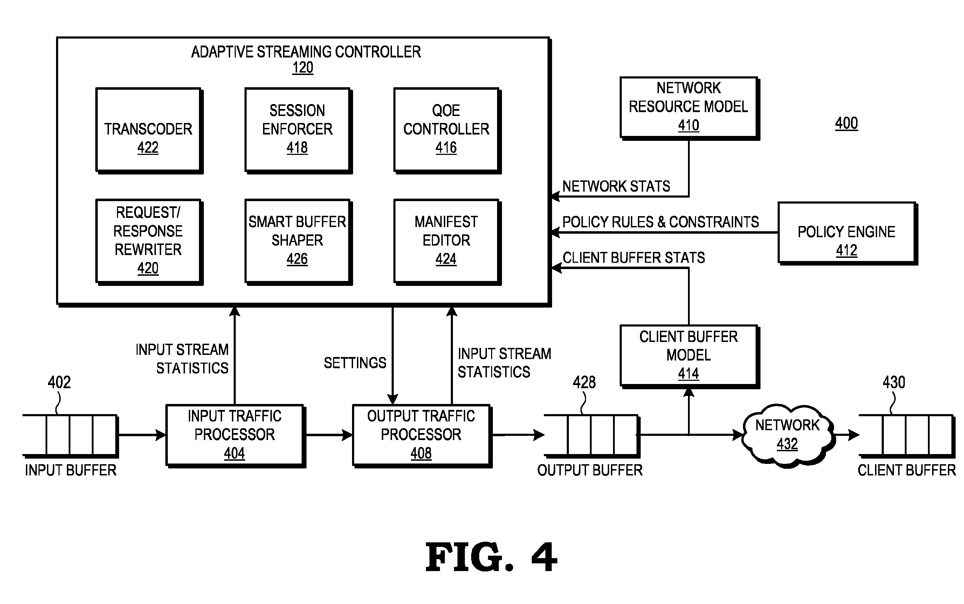

FIG. 4 is a block diagram illustrating an adaptive streaming control system 400 (corresponding to the network device 108 of FIG. 1) in accordance with some embodiments. In at least one embodiment, the adaptive streaming control system 400 is implemented as an MSG (e.g., a video service gateway (VSG)). An input buffer 402, representing the data packet coming off the network (from the media server) comprises one or more input media streams for a media session, and in some cases, a manifest indicating available operating points. An input traffic processor 404 receives the incoming data packet, identifies information related to the data packet, and produces metadata about the media session. For example, in some embodiments the input traffic processor 404 identifies a list of the input media streams, operating points associated with the input media streams, the number of frames, and the like. This metadata represents stream statistics that are sent to an adaptive streaming controller 120, as well as to an output traffic processor 408.

In the illustrated embodiment, other inputs to the adaptive streaming controller 120 include network statistics from a network resource model 410, policy rules and constraints from a policy engine 412, client buffer statistics from a client buffer model 414, and stream statistics from the output traffic processor 408. In at least one embodiment, the network resource model 410 comprises heuristics to corral all data packets into useful information to provide to the adaptive streaming controller 120. For example, the network resource model 410 may monitor and identify network congestion, network events, and the like. The adaptive streaming controller 120 is responsible for translating the target media quality value provided by the policy engine 412 for the media session or media stream into one or more target media qualities (and associated operating points if applicable) and is responsible for enforcing the target media quality on the presented media stream. To produce the presented media stream, the adaptive streaming controller 120 uses a combination of outputs from the Input Traffic Processor 404, the Client Buffer Model, and application layer information. The Input Traffic Processor 404 computes or estimates the media quality and may sample the media stream for this purpose. The Client Buffer Model models the media content arrival and playback, and produces a buffer fullness estimation that is used by the Session Enforcer 418, and the media-aware buffer shaper 426..

The adaptive streaming controller 120 receives an estimate of the current media quality for the media stream from the Input Traffic Processor 404 and compares it to the target media quality. If the stream's current estimated media quality value is higher than the target media quality value, the adaptive streaming controller 120 will force the media client to a lower-quality operating point. If, however, the media stream's current estimated media quality value is lower than or within some threshold of the target media quality value, the adaptive streaming controller 120 will continue to monitor the session until such time as the quality level exceeds the threshold. The adaptive streaming controller 120 continually re-evaluates the current estimated media quality based on the latest available data and decides whether or not to force a switch to a lower operating point as appropriate. In other embodiments, the adaptive streaming controller 120 uses meta-data about the operating points (parsable via a session manifest or other source of meta-data) to apply a lookup table, heuristic or computation to determine the target operating point prior to the arrival of media payload.

In some embodiments, the adaptive streaming controller 120 accomplishes the task of forcing the media client to switch to the target operating point through a combination of network traffic enforcement, request/response rewriting, media transcoding, manifest editing (pruning), and the like. To accomplish this, the adaptive streaming controller 120 is depicted as comprising a session enforcer 418, a request/response rewriter 420, a transcoder 422, and a manifest editor 424, and a Session Enforcer 418. These modules of the adaptive streaming controller 120 are responsible for realizing the policy actions.

In circumstances where network traffic enforcement is used to control the media session, the adaptive streaming controller 120 adjusts the network bit rate using the session enforcer 418 to force the media client to play the target operating point. The session enforcer 418 scales down or up the network bit rate until the client begins requesting an operating point within a threshold of the target media quality. If available, the session enforcer 418 will make use of bit rates advertised in a streaming protocol's manifest in order to more quickly force the media client to a particular operating point. To accommodate variable bit rate media content, the session enforcer 418 also adjusts the network bit rate in relation to the current media bit rate. In some embodiments, network bit rate enforcement mechanisms used by the session enforcer 418 comprise policing (i.e., packet dropping) and shaping (i.e., packet delaying). In some embodiments, the session enforcer may be configured to apply a fixed network bit rate or one of a set of fixed network bit rates. For example, this may apply in cases where insufficient information is available about the media session or the media client is known to react poorly to dynamic scaling of network bit rate.

The adaptive streaming controller 120 uses the request/response rewriter 420 to rewrite the request for a media stream (for a particular operating point) from the media client to the media server, or rewrites the response from the media server to the media client's request in order that the client is presented with a media stream that is within a threshold of the target media quality. For example, if the media client requests a media stream of a quality corresponding to an operating point that is greater than the target media quality, the request/response rewriter 420 may edit the request, such that the media server receives a request for an operating point of a media quality equal to or less than the target media quality. Similarly, the request/response rewriter 420 may allow the request for the operating point corresponding to a media quality greater than the target media quality to be delivered to the media server, and then edit the response from the media server, such that the media stream presented to the media client corresponds to a media quality equal to or less than the target media quality. In some embodiments, the adaptive streaming controller 120 uses the transcoder 422 to transcode the media stream itself into a modified media stream of a lower quality. Transcoding is the operation of converting a media signal, such as an audio signal or a video signal, from one format into another or for bit rate reduction to adapt media to a specified bandwidth. That is, as the media data traverses the network, the transcoder 422 intercepts and alters the media data, such that modified media data is produced corresponding to a target media quality. In some embodiments, the adaptive streaming controller 120 uses the manifest editor 424 to modify the media stream manifest files before they are delivered to the media client. For example, a media session comprising a set of media streams may include a corresponding manifest indicating a plurality of operating points. The manifest editor 424 may modify this manifest so as to remove one or more of the plurality of operating points that are greater than a threshold from the target media quality, such that the media client is forced to use the remaining operating points having a lower or equal estimated media quality to the target media quality.

In the illustrated embodiment, the adaptive streaming controller 120 further comprises a media-aware buffer shaper 426 to make adjustments to the adaptive streaming control mechanisms in order to maintain a particular buffer fullness range. Maintaining a stable buffer fullness facilitates prevention of stream switches in adaptive sessions, prevention of undesired buffering events, and network traffic savings. That is, the media-aware buffer shaper 426 prevents the media client from wanting to switch to a stream that is higher or lower than the target operating point by constraining the buffer fullness to a stable range. That way, the media client will not have too much buffered content (such that the media client wants to switch to a higher stream), and the media client will not have too little buffered content (such that the media client wants to switch to a lower operating point).

For non-adaptive and adaptive streaming sessions, a policy may be applied to a session that constrains the amount of unplayed, buffered media that is available to the media client. The media-aware buffer shaper 426 satisfies this policy by configuring the session enforcer 418 to drop or delay traffic such that the session's buffer fullness does not exceed certain bounds. In order to maintain a stable buffer fullness, the media-aware buffer shaper 426 uses media bit rate and buffer fullness as calculated by the Input Traffic Processor 404 and the Client Buffer Model 414, respectively. By tracking the absolute buffer fullness, the rate of change of the buffer fullness, and the current media bit rate, the media-aware buffer shaper 426 is able to make shaping adjustments based on current, past, and future buffer fullness states.

In some embodiments, the Adaptive Streaming Controller 120 uses a Session Enforcer 418 to make adjustments to the allowable buffer fullness value that is an input to the media-aware buffer shaper in order to force a stream switch (a switch from one operating point to another) at the media client. For example, a media session whose current estimated media quality exceeds the threshold relative to the target media quality may have a default allowable buffer fullness of 60 seconds. The Session Enforcer 418 may decrease the allowable buffer fullness to 20 seconds in order to force the media client to choose a lower operating point.

If the adaptive streaming controller 120 modifies the media stream to produce an output media stream at a target media quality, the adaptive streaming controller 120 communicates these changes and settings to the output traffic processor 408. The output traffic processor 408 sends the original media stream (if the current quality level does not exceed some threshold around the target quality level) or the output media stream at the target media quality (if the current quality level does exceed some threshold around the target quality level, resulting in modification of the media stream (which may include the manifest) by the adaptive streaming controller 120) to the output buffer 428. The media stream or modified media stream is then transmitted to the media client buffer 430 via the network 432.

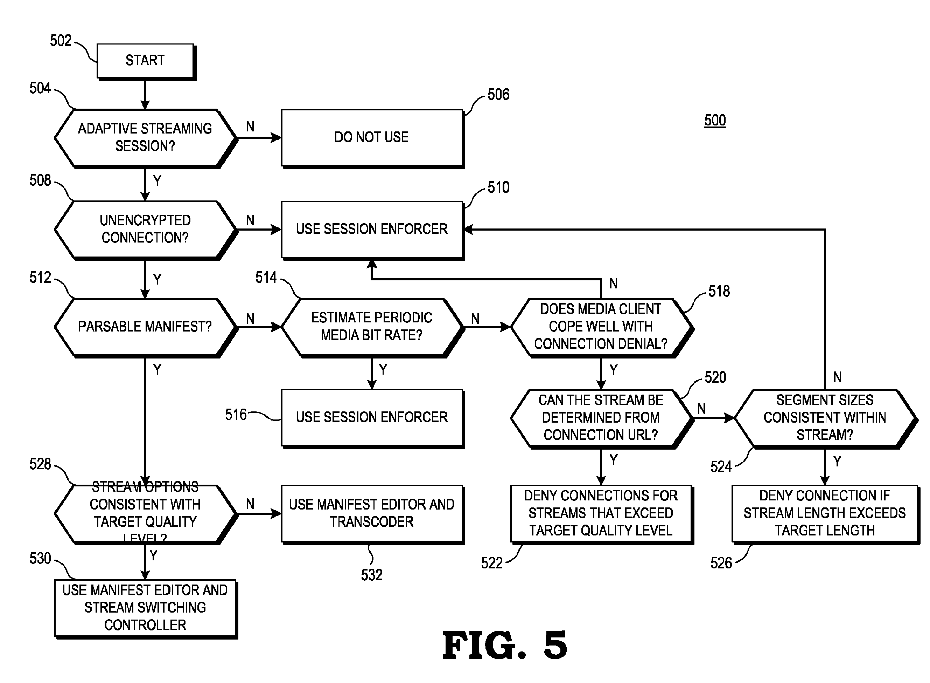

FIG. 5 is a flow diagram illustrating an example method 500 for selecting an adaptive streaming control mechanism using the adaptive streaming control system 400 of FIG. 4 in accordance with some embodiments. At block 502, the method 500 initiates with the start of a media session. At block 504, the adaptive streaming control system 400 identifies whether the media session is an adaptive streaming media session. If the media session is not an adaptive streaming media session, then an adaptive streaming control mechanism cannot be used to modify the media stream, as indicated at block 506. If the media session is an adaptive streaming session, then the method 500 proceeds to block 508. For example, if the media session comprises a download of an MP4 file over HTTP, the adaptive streaming controller 120 is not used.

At block 508, the adaptive streaming control system 400 determines whether the HTTP connection is unencrypted. If the HTTP connection is encrypted, then the session enforcer 418 is used to control the output media stream at block 5₁₀. In such a case, the adaptive streaming control system 400 can track the traffic in the media session enough to identify it as an adaptive streaming session, but the content is encrypted and therefore cannot be modified. As a result, the session enforcer 418 is used to apply a fixed-rate traffic enforcement policy by using a lookup table or policy to identify a target network bit rate. In some embodiments the lookup table is indexed by media server, media client device, streaming protocol, and target media quality, and is populated with values from experimental data.

If the HTTP connection is not encrypted, at block 512 the adaptive streaming control system 400 determines whether the media session contains a parsable manifest. If the media session does not contain a parsable manifest, the adaptive streaming control system 400 determines whether the periodic media bit rate can be estimated or calculated at block 514. If the periodic media bit rate can be estimated or calculated, at block 516, the adaptive streaming controller 120 uses the session enforcer 418 to control the network bit rate available to the media session. The session enforcer 418 uses dynamic inputs such as the short-term media bit rate, current network bit rate, current estimated buffer fullness, and current media quality in order to produce an output media bit rate suitable for achieving a stream switch to an operating point within a threshold of the target media quality. For example, with a Netflix (TM) media session on a desktop personal computer (PC), the manifest is sent over an encrypted channel and therefore cannot be intercepted. However, the media content itself is sent unencrypted so the adaptive streaming control system 400 is able to parse the media stream to compute the current media quality value, media bit rate, and client buffer fullness which comprise the inputs to the adaptive streaming controller 120, such that it can be used to control the adaptive streaming session.

If at block 514 the adaptive streaming control system 400 determines that the media bit rate cannot be estimated or calculated, at block 518 the adaptive streaming control system 400 determines whether the media client copes well with connection denial. If the media client does not cope well with connection denial, the method 500 returns to block 510, and the session enforcer 418 is used. If, however the media client does cope well with connection denial, then at block 520 the adaptive streaming control system 400 determines if the media stream's quality can be determined from the connection Uniform Resource Locator (URL). If the media stream quality can be determined from the connection URL, then the method 500 proceeds to block 522, and the adaptive streaming controller 120 denies connections for media streams that exceed the target media quality. For example, in the case of an adaptive streaming protocol lacking a parsable manifest with an URL scheme containing a session ID and stream ID, then, given a mapping between stream IDs and media qualities (e.g. if the stream ID is the stream's media bit rate), then the adaptive streaming control system 400 can selectively deny streams that will not conform to our target media quality.

If, however, at block 520, the media stream cannot be determined from the connection URL, then at block 524, the adaptive streaming control system 400 determines whether the segment sizes for the media session are known to be consistent within a particular operating point and can be mapped to a particular media quality. If the segment sizes are not consistent within an operating point, then the method 500 returns to block 510, and the session enforcer 418 is used to control the output media stream. If, however, the segment sizes are known to be consistent within an operating point, the adaptive streaming controller 120 denies connections for streams having segments of a length that exceed the target length (based on a mapping of quality level to stream length). For example, an adaptive streaming protocol with no manifest and no way of distinguishing streams based on URL structure may still have distinguishable streams based on the length of each segment. Most adaptive streaming protocols will divide the media content into segments of a fixed duration (e.g., 10 seconds). The length in bytes of these fixed-duration segments will be roughly consistent among segments of the same quality level, but will be vastly different for segments of different quality levels. This information can be leveraged to selectively deny requests for segments based on the length in bytes. In some embodiments, the adaptive streaming controller 120 uses a lookup table indexed by media server, media client device, streaming protocol, and segment length to yield a current estimated media quality value. Depending on this estimated value's conformance to the target media quality value, the adaptive streaming controller 120 would either permit or deny the connection.

Returning to block 512, if the adaptive streaming control system 400 determines that the media session comprises a parsable manifest, the method 500 proceeds to block 528, whereby the adaptive streaming control system 400 determines whether the manifest comprises operating points satisfying target quality requirements. If the manifest comprises operating points consistent with the target media quality, at block 530 the adaptive streaming controller 120 uses the manifest editor 424 and request/response rewriter 420 to modify the data packet corresponding to the media stream. For example, in the case of HLS, manifests are typically delivered unencrypted and in compliance with the Internet Engineering Task Force (IETF) draft specification "HTTP Live Streaming". The adaptive streaming control system 400 can therefore intercept and rewrite the manifest files. The manifest editor 424 will prune all operating points from the manifest that are likely to violate the media quality constraints as specified in the session's policy configuration. That is, without seeing the bitstream itself, the manifest editor 424 can eliminate operating points that are likely to violate the media quality constraints as specified in the session's policy, but it cannot typically narrow the selection to a single stream. The adaptive streaming control system 400 then presents, to the media client, only those operating points that are likely to be able to satisfy the media quality constraints. If more than one operating point could potentially satisfy the media quality constraints, the adaptive streaming controller 120 will force the media client to select the operating point that best achieves the target media quality.

Returning to block 528, if the manifest does not include stream options consistent with the target media quality, at block 532 the adaptive streaming controller 120 uses the manifest editor 424 and the transcoder 422 to control the output media stream. For example, an HLS session with operating points that will likely fall outside of the target media quality constraints (e.g., all of the operating points provide a bit rate that is too high for the policy configuration), the manifest editor 424 prunes the manifest down to a single operating point, and the transcoder 422 transcodes that operating point to the target media quality.

A system includes a network device coupled to a network. The network device is to monitor media session conditions for a media session with a media client served by the network and enforce policy on the media session based on the media session conditions responsive to determining the media session is using an adaptive streaming protocol. In one embodiment, the enforced policy includes at least one of: session policy; video policy; audio policy; subscriber policy; client device policy; network policy; and application policy. The network device can enforce policy on the media session by: determining a current estimated media quality of at least one media stream of the media session based on the monitored media session conditions; determining a target media quality for the media session; and modifying the media session responsive to a difference between the current estimated media quality and the target media quality exceeding a threshold. In some embodiments, modifying the media session comprises modifying the media session using an adaptive steaming control mechanism. Further, modifying the media session using the adaptive streaming control mechanism can include modifying a manifest of available operating points presented to the media client so as to present to the media client only those available operating points that satisfy the target media quality. Moreover, modifying the media session using the adaptive streaming control mechanism can include modifying a network bit rate for the media session to direct the media client to select an operating point for playback that satisfies the target media quality. Modifying the media session using the adaptive streaming control mechanism alternatively may include modifying at least one of an application-layer request or an application-layer response from the media client in order to deliver an operating point satisfying the target media quality in place of another operating point requested by the media client. Modifying the media session using the adaptive streaming control mechanism also may include transcoding at least one of an audio stream or a video stream of an operating point requested by the media client in order to produce a substitute operating point that satisfies the target media quality. Additionally, modifying the media session using the adaptive streaming control mechanism can include at least one of interrupting or denying a request from the media client for an operating point that does not satisfy the target media quality. The current estimated media quality can be determined using at least one of: an algorithmic calculation; a lookup table based on at least one of video attributes or audio attributes; application metadata; and a heuristically determined calculation based on aggregate information about similar media sessions.

Media, as used herein, represents audio, video, or a combination of audio/video. The discussed systems and techniques may be used to enforce adaptive streaming control by increasing the presentation quality (e.g., to ensure a minimum quality level), or by decreasing the presentation quality (e.g., to preserve or equitably distribute network resources). While the networked system 100 (FIG. 1) and its components have been described with reference to particular embodiments, the techniques described herein can be applied to any of a variety of use cases. That is, the target media quality 126 and the monitored media session conditions may be adjusted as needed such that the network device 108 facilitates desired adaptive streaming control in various scenarios. Similarly the media quality values may be adjusted to fit any scoring scheme.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors. A non-transitory computer readable storage medium may include any storage medium, or combination of storage media, accessible by a computer system during use to provide instructions or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A system comprising:
a network device coupled to a network, the network device to:
monitor media session conditions for a media session with a media client served by the network; and
enforce policy on the media session based on the media session conditions responsive to determining the media session is using an adaptive streaming protocol.

2. The system of claim 1, wherein the network device is to enforce policy on the media session by:
determining a current estimated media quality of at least one media stream of the media session based on the monitored media session conditions;
determining a target media quality for the media session; and
modifying the media session responsive to a difference between the current estimated media quality and the target media quality exceeding a threshold.

3. The system of claim 2, wherein modifying the media session comprises modifying the media session using an adaptive steaming control mechanism.

4. The system of claim 3, wherein modifying the media session using the adaptive streaming control mechanism comprises modifying a manifest of available operating points presented to the media client so as to present to the media client only those available operating points that satisfy the target media quality.

5. The system of claim 3 or claim 4, wherein modifying the media session using the adaptive streaming control mechanism comprises modifying (via shaping, policing, and the like) a network bit rate for the media session to direct the media client to select an operating point for playback that satisfies the target media quality.

6. The system of any one of claims 3 to 5, wherein modifying the media session using the adaptive streaming control mechanism comprises modifying at least one of an application-layer request or an application-layer response from the media client in order to deliver an operating point satisfying the target media quality in place of another operating point requested by the media client.

7. The system of any one of claims 3 to 6, wherein modifying the media session using the adaptive streaming control mechanism comprises transcoding at least one of an audio stream or a video stream of an operating point requested by the media client in order to produce a substitute operating point that satisfies the target media quality.

8. The system of any one of claims 3 to 7, wherein modifying the media session using the adaptive streaming control mechanism comprises at least one of interrupting or denying a request from the media client for an operating point that does not satisfy the target media quality.

9. The system of any one of claims 2 to 8, wherein the current estimated media quality is determined using at least one of: an algorithmic calculation; a lookup table based on at least one of video attributes or audio attributes; application metadata; and a heuristically determined calculation based on aggregate information about similar media sessions.

10. In a network comprising a network device coupled to a media client, a method comprising:
monitoring, at the network device, media session conditions for a media session with the media client; and
enforcing, at the network device, policy on the media session based on the media session conditions responsive to determining the media session is using an adaptive streaming protocol.

11. The method of claim 10, wherein enforcing policy on the media session comprises:
determining a current estimated media quality of the media session based on the monitored media session conditions;
determining a target media quality for the media session; and
modifying the media session responsive to a difference between the current estimated media quality and the target media quality exceeding a threshold.

12. The method of claim 11, wherein modifying the media session comprises at least one of:
modifying a manifest of available operating points presented to the media client so as to present to the media client only those available operating points that satisfy the target media quality;
modifying a network bit rate for the media session to direct the media client to select an operating point for playback that satisfies the target media quality;
modifying at least one of an application-layer request or an application-layer response from the media client in order to deliver an operating point satisfying the target media quality in place of another operating point requested by the media client; or
transcoding at least one of an audio stream or a video stream of an operating point requested by the media client in order to produce a substitute media stream that satisfies the target media quality.

13. The method of claim 11 or claim 12, wherein modifying the media session comprises at least one of interrupting or denying a request from the media client for an operating point that does not satisfy the target media quality.

14. The system of any one of claims 1 to 9, or the method of any one of claims claim 10 to 13, wherein the enforced policy includes at least one of: session policy; video policy; audio policy; subscriber policy; client device policy; network policy; and application policy.

15. A non-transitory computer readable storage medium embodying a set of executable instructions, the set of executable instructions to manipulate at least one processor to perform the method of any one of claims 10 to 14.
